Europäisches Patentamt

European Patent Office

Office européen des brevets

(19)

(11) Veröffentlichungsnummer: **0 176 528 B1**

(12) **EUROPÄISCHE PATENTSCHRIFT**

(45) Veröffentlichungstag der Patentschrift:
30.08.89

(51) Int. Cl.⁴: **F 16 K   1/12**

(21) Anmeldenummer: **85901427.6**

(22) Anmeldetag: **14.03.85**

(86) Internationale Anmeldenummer:
**PCT/EP 85/00102**

(87) Internationale Veröffentlichungsnummer:
**WO/8504231 (26.09.85 Gazette 85/21)**

(54) **DROSSELORGAN ZUR HERABSETZUNG DES DRUCKS IN FÖRDERLEITUNGEN.**

(30) Priorität: **19.03.84 DE 3409973**

(43) Veröffentlichungstag der Anmeldung:
**09.04.86 Patentblatt 86/15**

(45) Bekanntmachung des Hinweises auf die Patenterteilung: **30.08.89 Patentblatt 89/35**

(84) Benannte Vertragsstaaten:
**AT BE CH DE FR GB LI LU NL SE**

(56) Entgegenhaltungen:
**DE--C--   522 226**
**FR--A-- 1 194 431**
**GB--A--   842 940**

(73) Patentinhaber: **Cameron Iron Works GmbH**
**Lückenweg 1**
**D-3100 Celle (DE)**

(72) Erfinder: **BIESTER, Klaus**
**Immengarten 19**
**D-3000 Hannover (DE)**

(74) Vertreter: **Einsel, Robert, Dipl.-Ing.**
**Petersburgstrasse 28**
**D-3100 Celle (DE)**

EP 0 176 528 B1

## Beschreibung

Die Erfindung betrifft ein Drosselorgan zur Herabsetzung des Druckes in Förderleitungen mit einer bewegbaren Nadel zum Verengen oder Schließen einer Öffnung im Leitungsquerschnitt, bei dem die Nadel innerhalb der Förderleitung derart angeordnet ist, daß sie von dem in der Förderleitung fließenden Medium (beispielsweise Erdöl, Gas, Druckflüssigkeiten, Feststoffgemische oder dergl.) umströmt wird und ihre Bewegungsrichtung koaxial zur Bewegungsrichtung des in der Förderleitung fließenden Mediums vor und hinter der Nadel ist, und bei dem die Nadel mit einem Hydraulikantrieb eine Einheit bildet und der Hydraulikantrieb mit der Innenwand eines Rohrteils der Förderleitung über einen Steg verbunden ist. Die Halterung des Hydraulikantriebes setzt der Strömung einen nur geringen Widerstand entgegen. Die Hydraulikleitungen für den Hydraulikantrieb sind durch die Halterung, insbesondere durch den Steg geführt.

Drosselorgane sind Einrichtungen zur Regelung der Zuflußrate von Flüssigkeiten, Gasen und/oder Feststoffgemischen und enthalten Öffnungen, die relativ zum Querschnitt der Förderleitung verengbar sind.

Es sind Drosselorgane bekannt, bei denen die Öffnung in einem Leitungsknie so angeordnet ist, daß die Strömungsrichtung durch die Öffnung 90° gegen die Strömungsrichtung der Förderleitung gedreht ist. Auf diese Weise kann von außen durch die Wandung der Förderleitung eine Nadel zum Verengen oder zum Schließen der Öffnung verstellt werden. Der Verstellmechanismus ist dabei senkrecht zur Zuflußseite der Förderleitung angeordnet. Diese bekannten Drosselorgane werden als einzelne in das Leitungssystem einsetzbare Bauteile gefertigt. Sie haben sich z.B. im Bohrbetrieb bewährt und sind sowohl zur Handbedienung als auch für die automatische oder ferngesteuerte Bedienung geeignet, Wegen des sehr hohen Drucks von beispielsweise 10,5 MPa (entsprechend 15 000 psi oder 105 bar) in den Förderleitungen und wegen der besonderen Zusammensetzung der Fördermittel, bei denen beispielsweise Öl-Sand-Gemische auftreten können, unterliegen die Drosselorgane, insbesondere ihre Blende und die Nadel, einem überaus hohen Verschleiß. Dieser Verschleiß und damit die Häufigkeit der Auswechslung der beschädigten Teile wird durch Wahl besonders widerstandsfähiger Materialien verringert. Er ist aber dennoch unerwünscht hoch.

Die FR-PS 11 94 431 zeigt ein Schließventil, bei dem ein bewegbarer Körper innerhalb einer Förderleitung angeordnet und über eine Halterung mit der Wandung der Förderleitung verbunden ist. Der Körper wird von dem die Förderleitung durchfließenden Medium umströmt und ist koaxial zur Bewegungsrichtung des Mediums vor und hinter dem Körper. Die Bewegung des Körpers wird durch einen Hydraulikantrieb bewirkt, wobei Hydraulikleitungen durch die Halterung geführt sind. Ein Dichtring ist entweder koaxial um den Körper gelegt oder koaxial in der Innenwandung der Förderleitung .befestigt. Der mittels des Hydraulikantriebs bewegte Körper kann daher gegen den Dichtring gefahren werden bzw. fährt diesen gegen die Innenwandung der Förderleitung. Auf diese Weise kann die Förderleitung verschlossen oder freigegeben werden.

Schließventile sind als Drosselorgane nicht oder allenfalls nur beschränkt verwendbar. Beispielsweise bei der Förderung von Rohöl, Erdgas etc. sollen die Drosselorgane gerade bestimmte Fördermengen durchlassen, für bestimmte Drücke sorgen usw. ; ein Verschließen der Förderleitung ist zwar gelegentlich auch Aufgabe des Drosselorgans, nicht aber sein Hauptzweck.

Bei einer Verwendung des o.a. Schließventils bei der Förderung von Erdöl oder Öl-Sand-Gemischen würden die Dichtringe durch Abrasion und Druckverhältnisse innerhalb kürzester Zeit zerstört sein, praktisch bereits unmittelbar nach Inbetriebnahme.

Der Erfindung liegt nun die Aufgabe zugrunde, den Verschleiß in Drosselorganen weiter herabzusetzen.

Diese Aufgabe wird bei dem eingangs beschriebenen Drosselorgan dadurch gelöst, daß in der Förderleitung oder in dem Rohrteil ein auswechselbarer Zentraleinsatz vorgesehen ist, der aus zwei koaxialen Rohrkörpern besteht, die über die Halterung miteinander verbunden sind. Der äußere Rohrkörperdieses Zentraleinsatzes ist in die Wandung der Förderleitung oder des Rohrteils eingepaßt. Der innere Rohrkörper enthält den Hydraulikantrieb, der seinerseits eine aus einem Hydraulikkolben und der Nadel bestehende, innerhalb des Zentraleinsatzes geführte trennbare Einheit enthält. Die Nadel wirkt mit der Öffnung zusammen, die durch eine relativ zum Leitungsquerschnitt verengte Blende gebildet wird. Der Zentraleinsatz ist an seiner Außenseite mit mehreren Ringnuten versehen, in die Dichtringe eingesetzt sind, die einen Zweitweg für das in der Förderleitung fließende Medium sperren. Eine von außen durch die Wandung der Förderleitung oder des Rohrkörpers geführte Hydraulikleitung für den Hydraulikantrieb endet zwischen zweien dieser Dichtringe.

Ein wesentlicher Grund für den hohen Verschleiß bei den eingangs genannten Drosselorganen mit dem um 90° gedrehten Strömungsverlauf liegt darin, daß das die Förderleitung durchfließende Medium einseitig auf die Fläche der Nadel trifft und daher diese Fläche abnutzt. Bei der erfindungsgemäßen Lösung dagegen wird die Nadel in die Achsrichtung des Mediums gelegtund vom Medium umströmt. Ihre Spitze ist der Förderrichtung entgegengerichtet und bietet somit keine oder nur eine geringe Angriffsfläche für das Medium.

Durch den Zentraleinsatz wird es möglich, bei doch erforderlich werdenden Auswechslungen nicht das ganze Drosselorgan, sondern nur den Zentraleinsatz zu wechseln. Da der Strömungsverlauf nun innerhalb des Drosselorgans zwischen den verschiedenen koaxialen Teilen des Zentraleinsatzes verläuft, kann bei der Auswahl des Materials darauf speziell abgestellt werden ; die der Umgebung zugewandte Rohrwandung kann aus anderem Material bestehen, da es dem abrasiven Medium nicht mehr in dem Maße ausgesetzt ist.

Zur näheren Erläuterung der Erfindung wird im folgenden ein Ausführungsbeispiel anhand der Zeichnungen beschrieben. Diese zeigen in.

Fig. 1 einen Längsschnitt durch einen Rohrkörper mit dem Drosselorgan gemäß der Erfindung.

Fig. 2 einen Querschnitt durch den in Fig. 1 dargestellten Rohrkörper.

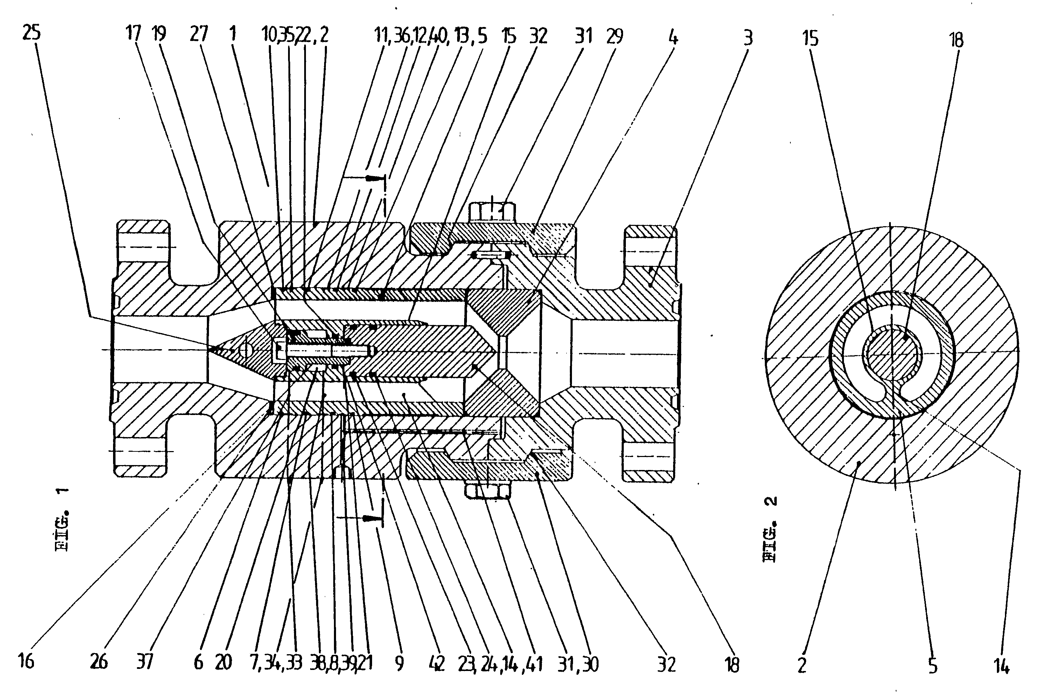

In Fig. 1 ist ein Drosselorgan für eine angedeutete Förderleitung 1 dargestellt. Das Drosselorgan besteht aus einem Rohrkörper 2 und einem Vorsatzkörper 3, die beide zusammen eine Blende 4 und einen Zentraleinsatz 5 umschließen. Der Zentraleinsatz 5 besteht aus einem rohrförmigen Teil, dessen Außenwandung an die Innenwandung des Rohrkörpers 2 angepaßt und gegen diesen durch ringförmige Dichtungsringe 6, 7, 8, 9 abgedichtet ist. Die ringförmigen Dichtungen haben rechteckförmigen Querschnitt und sind in Nuten 10, 11, 12, 13 in der Außenwandung des Zentraleinsatzes 5 angeordnet. Die Innenseite des Zentraleinsatzes 5 ist mit einem Steg 14 versehen, der an seiner der Strömung des in der Förderleitung fließenden Mediums zugewandten Seite ähnlich einem Schiffsbug doppelseitig abgeschrägt ist und so der Strömung nur einen geringen Widerstand entgegensetzt. Die der Strömung abgewandte Seite des Stegs 14 ist strömungsgünstig abgerundet. Mit dem Steg 14 starr verbunden, insbesondere mit ihm aus einem Stück bestehend ist der ortsfeste Teil 15 eines Hydraulik-Antriebes mit dem Hydraulik-Kolben 16, an dem mittels einer Schraube 17 die Nadel 18 befestigt ist. Die Nadel 18 ist im Rohrkörper 2 so zentrisch angeordnet, daß sie gleichmäßig von der Strömung umflossen wird und dieser Strömung nur einen geringen Widerstand entgegensetzt. Der Hydraulik-Kolben 16 hat zwei Bereiche unterschiedlichen Durchmessers, die in zwei Räumen entsprechend unterschiedlichen Durchmessers des ortsfesten Teils 15 des Hydraulikantriebs geführt sind. Der Kolben-Bereich 19 größeren Durchmessers ist in einem Hydraulik-Raum 20 entsprechenden Durchmessers geführt. Die Länge des Hydraulikraumes 20 ist soviel größer als die Länge des in ihm geführten Kolbenbereiches 19, daß dadurch der erforderliche Hubbereich für die Nadel 18 zwischen Schließung und maximaler Öffnung der Blende 4 ermöglicht wird. Der Kolbenbereich 21 kleineren Durchmessers ist so lang bemessen, daß er durch den entsprechenden Raum 22 ausreichend geführt werden kann. Die am vorderen Ende des Kolbens 16 befestigte Nadel 18 ist in dem ortsfesten Teil 15 geführt und gegenüber diesem Teile mit zwei ringförmigen Dichtungen 23, 24 abgedichtet.

Der Hydraulikraum 20 ist an seinem hinteren Abschluß durch eine Schraubkappe 25 abgeschlossen und abgedichtet. Diese Kappe 25 ist an ihrer Außenseite strömungsgünstig abgeschlossen, so daß der gesamte Hydraulik-Antrieb mit Steg 14 der Strömung nur geringen Widerstand entgegensetzt und somit auch relativ gering abgenutzt wird. Der Zentraleinsatz 5 ist so in den Rohrkörper 2 eingesetzt, daß er von einer hinteren Schulter 26 des Rohrkörpers 2 durch eine Weicheisendichtung 27 getrennt ist. Nach dem Zusammenbau des Rohrkörpers 2 mit der Blende 4 und dem Zentraleinsatz 5 wird der Rohrkörper 2 mit dem Vorsatzkörper 3 verbunden. Die Verbindung von Rohrkörper 2 und Vorsatzkörper 3 geschieht durch Klemmbacken 29,30, die den Umfang beider Körper 2, 3 umgreifen und durch Schraubverbindung 31 außerhalb des Rohrbereiches zusammengedrückt werden. Bei diesem Zusammendrücken werden die beiden Körper 2,3 infolge der schrägen Flanken 32 zusammengepreßt und zugleich die Blende 4 gegen den Zentraleinsatz 5 und dieser gegen den Weicheisenring 27 gedrückt. Auf diese Weise wird zugleich eine feste Einheit und ein auch bei den hohen Drucken des Bohrlochbetriebs dichtes System erzielt. Zum Antrieb des Hydraulik-Kolbens 16 werden durch die Wandung von Rohrkörper 2 und durch den die Wandungen von Rohrkörper und Zentraleinsatz 5 verbindenden Steg 14 Hydraulikleitungen 33, 34 geführt. Die Leitungen 33, 34 enden in ringförmigen Nuten 35, 36 an der Innenwandung des Rohrkörpers 2, die den Zentraleinsatz 5 so umgeben, daß bei jeder Winkellage des Zentraleinsatzes 5 die in seiner Wandung vorgesehenen Hydraulikleitungen 37, 38 über der Nute 35, 36 enden. Beim Einbau der Zentraleinheit 5 ist daher keine Justierung der Winkellage erforderlich, weil die Nuten 35, 36 als verbindende Hydraulikleitungen wirken. Eine weitere Hydraulikleitung 39 ist durch die Wandung des Rohrkörpers 2 zu einer Ringnut 40 an der Innenseite der Wandung geführt, die den Zentraleinsatz 5 an einer Stelle umgibt, an der eine Hydraulikleitung 41 durch die Wandung des Zentraleinsatzes 5 am hinteren Ende 42 des die Nadel 18 umschließenden und Führenden Raumes endet. Von den Hydraulikleitungen 33, 34 und 39 ist nur die zuletzt genannte sichtbar, da die Leitungen gegeneinander um bestimmte Winkel versetzt sind. Die Leitungen 33, 34 sind durch Striche angedeutet. Eine weitere Hydraulikleitung 43 im Rohrkörper 2 parallel zur Strömungsrichtung bis zur Stirnseite 44 unterhalb der Blende 4 dient zur Ableitung eines Druckes im Falle undichter Dichtungen 6, 7, 8, 9. Der Ausgang 45 der Hydraulikleitung 39 ist mit einem nicht dargestellten Indikator oder einer automatischen Steuereinrichtung verbunden, die bei schadhafter Dichtung und durchschlagendem Druck Schieber oder dergl schließt, die im Zuge der Förderleitung angeordnet sind. In der Schraubkappe 25 ist ein Loch vorgesehen, das als Handhabe oder Angriffspunkt für ein Werkzeug zum Entfernen oder Anbringen der Kappe 25 dient. Die Hydraulikleitungen 33, 34 sind jeweils mit einem nicht dargestellten Ausgleichsgefäß verbunden, das bei der Kolbenbewegung die überschüssige Flüssigkeit aufnimmt. Zentraleinsatz 5, Steg 14 und Halterung 15 sind vorzugsweise aus einem Stück gefertigt, wobei die Formgebung durch Erodierung, d.h. durch funkenerosives Abtragen der nicht benötigten Metallteile erfolgt. Die Leitungsquerschnitte sind an jeder Stelle mit Ausnahme der Blende 4 so bemessen, daß sich für jeden Querschnitt mit Ausnahme der Blende 4 die gleiche Querschnittsfläche ergibt. Diese Bemessung setzt den Abrieb weiter herab. Die Blende 4 ist symmetrisch aufgebaut. Das bedeutet, daß sie gleichmäßig abgenutzt wird. Das bedeutet, daß sie bei Verschleiß nicht sogleich ausgewechselt werden muß. Wegen der Symmetrie kann die Blende umgedreht werden und ist dann wieder einsatzfähig. Diese Möglichkeit erhöht die Benutzbarkeit der Anordnung weiterhin. Die Strömung kann gleichermaßen von einer der beiden Seiten her erfolgen. Die Anordnung ist hier aber so getroffen daß die Blende 4 dem Strömungseingang zugewandt ist. Die die Spitze der Nadel 18 bildenden Flanken sind so bemessen, daß sie den Wandungen der Blende 4 etwa parallel liegen.

Fig. 2 zeigt einen Querschnitt durch Fig. 1 an der Stelle, an der Rohrkörper 2, Steg 14 und Zentraleinsatz 5 sowie die Nadel 18 erkennbar sind.

## Patentansprüche

1. Drosselorgan zur Herabsetzung des Druckes in Förderleitungen, mit

a) einer bewegbaren Nadel zum Verengen oder Schließen einer Öffnung im Leitungsquerschnitt, wobei die Nadel (18) innerhalb der Förderleitung (1) derart angeordnet ist, daß sie von dem in der Förderleitung fließenden Medium umströmt wird und ihre Bewegungsrichtung koaxial zur Bewegungsrichtung des in der Förderleitung fließenden Mediums vor und hinter der Nadel (18) ist;

b) einem Hydraulikantrieb (16), der mit der Nadel (18) eine Einheit bildet, mit der Wandung (5) der Förderleitung (1) oder eines Rohrteils (2) der Förderleitung (1) über einen Steg (14) verbunden ist, und so an der Innenwand des Rohrteils (2) befestigt ist, daß die Halterung (14, 15) des Hydraulikantriebes (16) der Strömung einen nur geringen Widerstand entgegensetzt;

c) wenigstens einer Hydraulikleitung (33, 34) für den Hydraulikantrieb (16), die durch die Halterung (14, 15), insbesondere durch den Steg (14), geführt ist;

gekennzeichnet durch,

d) einen auswechselbaren Zentraleinsatz (5) in dem Rohrteil (2) oder in der Förderleitung (1), der so ausgebildet ist,

e) daß der Zentraleinsatz (5) aus zwei koaxialen Rohrkörpern besteht, die über den Steg (14) fest miteinander verbunden sind;

f) daß der äußere der beiden Rohrkörper des Zentraleinsatzes (5) in die Wandung der Förderleitung (1) eingepaßt ist;

g) daß in dem inneren der beiden Rohrkörper des Zentraleinsatzes (5) der Hydraulikantrieb (16) gehaltert ist;

h) daß der Hydraulikantrieb (16) einen Hydraulikkolben (16) enthält, der mit der Nadel (18) trennbar zu einer Einheit verbunden ist und innerhalb des Zentraleinsatzes (5) geführt ist;

i) daß die Nadel (18) mit einer Öffnung zusammenwirkt, die durch eine relativ zum Leitungsquerschnitt verengte Blende (4) gebildet ist.

j) daß der Zentraleinsatz (5) an seiner Außenwandung mit mehreren Ringnuten (10-13) versehen ist, in die Dichtringe eingesetzt sind, die einen Zweitweg für das in der Förderleitung fließende Medium sperren;

k) und daß zwischen zweien der Dichtringe in den Ringnuten (10-13) eine von außen durch die Wandung der Förderleitung (1) oder des Rohrkörpers (2) geführte Hydraulikleitung (37, 38) für den Hydraulikantrieb (16) endet.

2. Drosselorgan nach Anspruch 1, dadurch gekennzeichnet, daß zwischen zweien der Dichtringe in den Ringnuten (10-13) eine weitere Hydraulikleitung (39) endet, die zur Indikation von evtl. Undichtigkeiten nutzbar ist.

3. Drosselorgan nach Anspruch 2, dadurch gekennzeichnet, daß insgesamt vier Dichtringe in vier Ringnuten (10-13) vorgesehen sind, die zwischen sich drei ringförmige Zwischenräume bilden, in denen je eine Hydraulikleitung (37, 38, 39) endet, von denen zwei für den Hydraulikantrieb (16) dienen und eine zur Indikation evtl. Undichtigkeiten.

4. Drosselorgan nach einem der Ansprüche 1 bis 3, dadurch gekennzeichnet, daß die Dichtringe in den Ringnuten (10-13) rechteckigen Querschnitt aufweisen.

5. Drosselorgan nach einem der Ansprüche 2 bis 4, dadurch gekennzeichnet, daß die Stirnseite des den Zentraleinsatz (5) umschließenden Teils der Förderleitung (1) oder des Rohrkörpers (2) mit der zur Indikation nutzbaren Hydraulikleitung (39) über eine Leitung (41) verbunden ist.

6. Drosselorgan nach einem der Ansprüche 1-5, dadurch gekennzeichnet, daß die Halterung (14, 15), insbesondere der Steg (14) an der dem Strömungseintritt zugewandten Seite doppelseitig zugespitzt ist.

7. Drosselorgan nach einem der Ansprüche 1-6, dadurch gekennzeichnet, daß die Halterung (14, 15), insbesondere der Steg (14) an der dem Strömungsausgang zugewandten Seite abgerundet ist.

8. Drosselorgan nach einem der Ansprüche 1-7, dadurch gekennzeichnet, daß die Blende (4) symmetrisch aufgebaut ist, derart, daß die zur engsten Stelle der Blende (4) führenden Wandungen als Verschlußflanken nutzbar sind.

9. Drosselorgan nach einem der Ansprüche 1-8, dadurch gekennzeichnet, daß die Blende (4) in eine auswechselbare Einheit ist, daß Zentraleinsatz (5) und Blende (4) in einen gemeinsamen Rohrkörper (2) einsetzbar sind, daß an der Stirnseite des Zentraleinsatzes (5) zum ausgangsseitigen Abschluß des Rohrkörpers (2) ein Dichtring (27) aus Weicheisen vorgesehen ist, und daß das eingangsseitige Ende des Rohrkörpers (2) mittels eines Klemmstückes (29, 30, 31) mit einem Vorderkörper (3) zusammengefügt ist.

10. Drosselorgan nach Anspruch 9, dadurch gekennzeichnet, daß das Klemmstück (29, 30, 31) aus zwei Teilen (29, 30) besteht, die zusammengeschraubt werden und dabei Blende (4) und Zentraleinsatz (5) gegen die Dichtung (27) aus Weicheisen drücken.

11. Drosselorgan nach einem der Ansprüche 1-10, dadurch gekennzeichnet, daß der Hydraulik-Kolben (16) zwei zylindrische Bereiche (19, 21) mit unterschiedlichen Durchmessern aufweist, die in entsprechend geformten Räumen (20, 22) des Zentraleinsatzes (5) geführt sind.

12. Drosselorgan nach Anspruch 11, dadurch gekennzeichnet, daß der Raum (20) größeren Durchmessers eine größere Länge hat als das Kolbenteil (19) größeren Durchmessers und als Hydraulikraum dient.

13. Drosselorgan nach Anspruch 12, dadurch gekennzeichnet, daß zwei Hydraulikleitungen (33, 34) mit den Enden des Hydraulikraumes (20) verbunden sind.

14. Drosselorgan nach einem der Ansprüche 1-13, dadurch gekennzeichnet, daß die die Spitze der Nadel (18) bildenden Flanken im wesentlichen parallel zu den Wandungen der Blende (4) verlaufen.

15. Drosselorgan nach einem der Ansprüche 1-14, dadurch gekennzeichnet, daß der Hydraulikraum (20) durch eine Kappe (25) verschlossen ist.

16. Drosselorgan nach Anspruch 15, dadurch gekennzeichnet, daß die Kappe (25) in die Halterung (15) eingeschraubt ist.

17. Drosselorgan nach Anspruch 16, dadurch gekennzeichnet, daß in der Kappe (25) ein Mittel, insbesondere eine Bohrung als Angriffspunkt für ein Werkzeug zum Auswechseln der Kappe, (25) vorgesehen ist.

## Claims

1. Constriction member for reducing the pressure in transport pipelines with

a) a movable needle (18) for constricting or closing an opening in the pipeline's cross-section whereby the needle (18) is arranged within the pipeline (1) in such a manner that the medium conveyed within the pipeline flows around it and its direction of movement is coaxial with the direction of movement of the medium being conveyed upstream and downstream of the needle (18) ;

b) a hydraulic drive (16) which forms a unit with the needle (18) and which is connected to the wall (5) of the pipeline (1) or of a pipe member (2) of the pipeline (1) via a web (14) and which is fastened to the inner wall of the pipe member (2) in a manner that the holder (14, 15) of the hydraulic drive (16) poses only slight resistance against the flow ;

c) at least one hydraulic conduit (33, 34) for the hydraulic drive (16) which conduit is brought through the holder (14, 15) especially through the web (14) ;

characterized in

d) an exchangeable central insert (5) provided in the pipe member (2) or in the pipeline (1) and designed in such a manner ;

e) that the central insert (5) is composed of two pipe members which are coaxially arranged and connected together by the web (14) ;

f) that the outer of the two pipe members of the central insert (5) is fitted into the wall of the pipeline (1) ;

g) that the hydraulic drive (16) is hold within the inner pipe member of the central insert (5) ;

h) that the hydraulic drive (16) includes a hydraulic piston (16) which is combined with the needle (18) to form a separable unit and is guided within the central insert (5) ;

i) that the needle (18) cooperates with an opening which is formed by a restrictor (4) having a cross-section which is narrow compared with the cross-section of the pipeline ;

j) that the outer wall of the central insert (5) is provided with a plurality of annular grooves (10-13) into which sealing rings are inserted, said sealing rings blocking a second path for the medium being conveyed in the pipeline ;

k) and that a hydraulic conduit (37, 38) brought from the exterior through the wall of the pipeline (1) or the pipe member (2) ends between two of said sealing rings.

2. Constriction member according to claim 1, characterized in that a further hydraulic conduit (39) ends between two of the said sealing rings in the annular grooves (10-13) which further conduit can be used to indicate possibly existing untightnesses.

3. Constriction member according to claim 2, characterized in that there are provided four sealing rings within four annular grooves (10-13) providing in between three annular spaces in each of which ends a hydraulic conduit (37, 38, 39) two of them serving for the purpose of the hydraulic drive and one of them serving for the indication of possibly existing untightnesses.

4. Constriction member according to any of the claims 1-3 characterized in that the sealing rings in the annular grooves (10-13) having a rectangular cross-section.

5. Constriction member according to any of the claims 2-4 characterized in that the frontal face of the part of the pipeline (1) or the pipe member (2) which surrounds the central insert (5) is connected via a conduit (41) with the hydraulic conduit (39) usable for indication.

6. Constriction member according to any of the claims 1-5, characterized in that, at its side facing the flow inlet, the holder (14, 15) particularly the web (14) is bilaterally tapered.

7. Constriction member according to any of the claims 1-6, characterized in that, on the side facing the flow outlet, the holder (14, 15), particularly the web (14) is rounded.

8. Constriction member according to any of the claims 1-7, characterized in that the restrictor (4) is of such symmetrical construction that the two walls leading to the narrowest point of the restrictor (4) can be utilized as a closing flank.

9. Constriction member according to any of the claims 1-8, characterized in that the restrictor (4) is an exchange able unit; that the central insert (5) and the restrictor (4) are insertable into a common pipe member (2); that a sealing ring (27) of soft iron is provided at the frontal face of the central insert (5) toward the outlet end of the pipe member (2); and the end of the pipe member (2) at the inlet end is combined with a frontal body (3) by means of a clamp (29, 30, 31).

10. Constriction member according to claim 9, characterized in that the clamp (29, 30, 31) is composed of two parts (29, 30) which are screwed together and thus press the restrictor (4) and the central insert (5) against the seal (27) of soft iron.

11. Constriction member according to any one of claims 1-10 characterized in that the hydraulic piston (16) has two cylindrical regions (19, 21) having different diameters and guided in correspondingly shaped chambers (20, 22) of the central insert. (5).

12. Constriction member according to claim 1, characterized in that the chamber (20) having the larger diameter has a greater length than the piston member (19) having the larger diameter and serves as the hydraulic chamber.·

13. Constriction member according to claim 2, characterized in that two hydraulic conduits (33, 34) are connected with the ends of the hydraulic chamber (20).

14. Constriction member according to any of the claims 1-13 characterized in that the flanks forming the tip of the needle (18) extend essentially parallel to the walls of the restrictor (4).

15. Constriction member according to any of the claims 1-14 characterized in that the hydraulic chamber (20) is closed by a cap (25).

16. Constriction member according to claim 15, characterized in that the cap (25) is screwed into the holder (15).

17. Constriction member according to claim 16, characterized in that in the cap (25) there are provided means particularly a bore as a point of attack for a tool for exchanging a the cap (25).

**Revendications**

1. Organe d'étranglement pour diminuer la pression dans des conduites de transport, comprenant :

a) Un pointeau mobile pour rétrécir ou fermer une ouverture ménagée dans la section transversale de la conduite, le pointeau (18) étant disposé à l'intérieur de la conduite de transport (1) de telle manière qu'il soit entouré par le milieu qui coule dans la conduite de transport et que sa direction de déplacement soit coaxiale à la direction de déplacement du milieu qui coule dans la conduite de transport devant et derrière le pointeau (18) ;

b) Un entraînement hydraulique (16) qui forme un ensemble avec le pointeau (18), qui est relié par l'intermédiaire d'une entretoise (14) à la paroi (5) de la conduite de transport (1) ou à une partie tubulaire (2) de la conduite de transport (1), et qui est fixé à la paroi intérieure de la partie tubulaire (2) de telle sorte que le support (14, 15) de l'entraînement hydraulique (16) n'oppose qu'une faible résistance à l'écoulement ;

c) Au moins un conduit hydraulique (33, 34) qui est destiné à l'entraînement hydraulique (16), et qui passe à travers le support (14, 15), et en particulier à travers l'entretoise (14) ;
caractérisé par :

d) Une garniture centrale interchangeable (5) dans la partie tubulaire (2) ou dans la conduite de transport (1) ; laquelle est constituée de telle manière :

e) Que la garniture centrale (5) se compose de deux corps tubulaires coaxiaux qui sont reliés rigidement entre eux par l'intermédiaire de l'entretoise (14) ;

f) Que celui des deux corps tubulaires de la garniture centrale (5) qui est situé à l'extérieur est ajusté dans la paroi de la conduite de transport (1) ;

g) Que l'entraînement hydraulique (16) est maintenu à l'intérieur des deux corps tubulaires de la garniture centrale (5) ;

h) Que l'entraînement hydraulique (16) comprend un piston hydraulique (16) qui est relié au pointeau (18) de manière amovible pour former un ensemble, et qui est guidé à l'intérieur de la garniture centrale (5) ;

i) Que le pointeau (18) coopère avec une ouverture constituée par un diaphragme (4) qui est rétréci par rapport à la section transversale de la conduite ;

j) Que la garniture centrale (5) est munie sur sa paroi extérieure de plusieurs rainures annulaires (10-13) dans· lesquelles sont insérées des · bagues d'étanchéité qui ferment un second trajet pour le milieu qui coule dans la conduite de transport ; et :

k) Qu'un conduit hydraulique (37, 38), lequel est destiné à l'entraînement hydraulique (16) et passe depuis l'extérieur à travers la paroi de la conduite de transport (1) ou du corps tubulaire (2), se termine entre deux des bagues d'étanchéité insérées dans les rainures annulaires (10-13).

2. Organe d'étranglement selon la revendication 1, caractérisé par le fait qu'un autre conduit hydraulique (39) se termine entre deux des bagues d'étanchéité insérées dans les rainures annulaires (10-13), conduit qui peut être utilisé pour indiquer des défauts d'étanchéité éventuels.

3. Organe d'étranglement selon la revendication 2, caractérisé par le fait qu'il est prévu au total quatre bagues d'étanchéité qui sont insérées dans quatre rainures annulaires (10-13) et entre lesquelles sont formés trois espaces intermédiaires annulaires dans chacun desquels se termine un conduit hydraulique (37, 38, 39) dont deux servent à l'entraînement hydraulique (16) et un à indiquer des défauts d'étanchéité éventuels.

4. Organe d'étranglement selon l'une des revendications 1 à 3, caractérisé par le fait que les bagues d'étanchéité insérées dans les rainures annulaires (10-13) présentent une section transversale rectangulaire.

5. Organe d'étranglement selon l'une des revendications 2 à 4, caractérisé par le fait que le côté frontal de la partie de la conduite de transport (1) ou du corps tubulaire (2) qui entoure la garniture centrale (5) est relié par un conduit (41) au conduit hydraulique (39) qui peut être utilisé pour l'indication des défauts.

6. Organe d'étranglement selon l'une des revendications 1 à 5, caractérisé par le fait que le support (14, 15), et en particulier l'entretoise (14), est en pointe des deux côtés sur sa face qui est tournée vers l'entrée de l'écoulement.

7. Organe d'étranglement selon l'une des revendications 1 à 6, caractérisé par le fait que le support (14, 15), et en particulier l'entretoise (14), est arrondi sur sa face qui est tournée vers la sortie de l'écoulement.

8. Organe d'étranglement selon l'une des revendications 1 à 7, caractérisé par le fait que le diaphragme (4) est réalisé symétriquement de telle manière que les parois qui conduisent à l'endroit le plus étroit du diaphragme (4) puissent être utilisées comme des flancs d'obturation.

9. Organe d'étranglement selon l'une des revendications 1 à 8, caractérisé par le fait que le diaphragme (4) constitue un ensemble interchangeable, que la garniture centrale (5) et le diaphragme (4) peuvent être introduits dans un corps tubulaire commun (2), qu'une bague d'étanchéité en fer doux (27) est prévue sur le côté frontal de la garniture centrale (5) pour fermer le corps tubulaire (2) du côté de la sortie, et que l'extrémité du corps tubulaire (2) qui est située du côté de l'entrée est assemblée à un raccord (3) au moyen d'une pièce de serrage (29, 30, 31).

10. Organe d'étranglement selon la revendication 9, caractérisé par le fait que la pièce de serrage (29, 30, 31) se compose de deux parties (29, 30) qui sont assemblées par vissage et qui serrent en outre le diaphragme (4) et la garniture centrale (5) sur le joint d'étanchéité en fer doux (27).

11. Organe d'étranglement selon l'une des revendications 1 à 10, caractérisé par le fait que le piston hydraulique (16) présente deux zones cylindriques (19, 21) de diamètres différents qui sont guidées dans des chambres (20, 22) formées en conséquence de la garniture centrale (5).

12. Organe d'étranglement selon la revendication 11, caractérisé par le fait que la chambre (20) de plus grand diamètre présente une longueur supérieure à celle de la partie de piston (19) de plus grand diamètre, et qu'elle sert de chambre hydraulique.

13. Organe d'étranglement selon la revendication 12, caractérisé par le fait que deux conduits hydrauliques (33, 34) sont reliés aux extrémités de la chambre hydraulique (20).

14. Organe d'étranglement selon l'une des revendications 1 à 13, caractérisé par le fait que les flancs qui constituent la pointe du pointeau (18) s'étendent pour l'essentiel parallèlement aux parois du diaphragme (4).

15. Organe d'étranglement selon l'une des revendications 1 à 14, caractérisé par le fait que la chambre hydraulique (20) est fermée par un bouchon (25).

16. Organe d'étranglement selon la revendication 15, caractérisé par le fait que le bouchon (25) est vissé dans le support (15).

17. Organe d'étranglement selon la revendication 16, caractérisé par le fait qu'il est prévu dans le bouchon (25) un moyen, en particulier un perçage, servant de point d'attaque pour un outil destiné à changer le bouchon (25).

FIG. 1

FIG. 2